(19) Europäisches Patentamt
European Patent Office
Office européen des brevets

(11) Numéro de publication : **0 067 093**
**B1**

(12) **FASCICULE DE BREVET EUROPÉEN**

(45) Date de publication du fascicule du brevet : **03.04.85**

(51) Int. Cl.[4] : **C 21 C 5/36**, C 21 C 7/064, C 21 B 3/06

(21) Numéro de dépôt : **82400906.2**

(22) Date de dépôt : **17.05.82**

(54) **Procédé de traitement de laitiers phosphurés.**

(30) Priorité : **22.05.81 FR 8110401**

(43) Date de publication de la demande : **15.12.82 Bulletin 82/50**

(45) Mention de la délivrance du brevet : **03.04.85 Bulletin 85/14**

(84) Etats contractants désignés : **BE DE GB IT LU NL SE**

(56) Documents cités :
**FR-A- 2 356 732**
**FR-A- 2 428 672**

(73) Titulaire : **INSTITUT DE RECHERCHES DE LA SIDERURGIE FRANCAISE (IRSID)**
**185, rue Président Roosevelt**
**F-78105 Saint Germain-en-Laye Cedex (FR)**

(72) Inventeur : **Riboud, Paul-Victor**
**50, rue Kélermann Appartement 501**
**F-57000 Metz (FR)**
Inventeur : **Gatellier, Christian**
**48, rue de la Vacquinière Montigny-les-Metz**
**F-57000 Metz (FR)**

(74) Mandataire : **Ventavoli, Roger et al**
**INSTITUT DE RECHERCHES DE LA SIDERURGIE FRANCAISE (IRSID) 185, rue Président Roosevelt**
**F-78105 Saint-Germain-en-Laye Cedex (FR)**

**EP 0 067 093 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne les traitements de laitiers phosphurés obtenus par affinage d'un bain métallique.

On sait que les opérations d'affinage des métaux fondus, tels que l'acier, consistent notamment à éliminer du bain métallique une quantité déterminée d'éléments dissous comme le phosphore, le soufre, etc... On y parvient habituellement en formant sur le bain un laitier dont le rôle essentiel est précisément de s'enrichir en ces éléments. On sait également que certains laitiers ainsi formés peuvent devenir, si des mesures appropriées ne sont pas prises à temps, des agents polluants, parfois même très nocifs pour l'homme.

Tel est particulièrement le cas des laitiers phosphurés obtenus par déphosphoration du bain métallique en phase réductrice au moyen d'alcalino-terreux, comme le calcium (brevet français n° 2.428.672 — IRSID) ou de leurs composés halogénés (brevet français n° 2.356.732 — Nippon Steel).

Il se trouve, en effet, que de tels laitiers, riches en phosphures, s'hydrolysent à froid au simple contact de l'air pour produire de la phosphine selon la réaction

$$M_3P_2 + 3H_2O \rightarrow 3MO + 2PH_3\uparrow$$

où M représente l'alcalino-terreux utilisé comme agent déphosphorant.

Or, la phosphine étant un gaz très toxique, il est indispensable de stabiliser le laitier avant qu'il ne s'hydrolyse.

La solution connue (brevet français n° 2.356.732 précité) consiste à oxyder à chaud le laitier en le soumettant à une atmosphère enrichie en oxygène. Celui-ci se porte alors sur le phosphure pour former un phosphate bien stable.

Toutefois, la réaction d'un gaz comme l'oxygène sur un laitier d'affinage même fluide, présente toujours une cinétique assez lente. De plus, cette méthode est peu pratique.

Elle nécessite notamment l'installation de moyens particuliers pour assurer le soufflage sur le laitier d'un courant gazeux oxygéné. De surcroît, le laitier doit impérativement être préalablement isolé du bain métallique pour éviter que celui-ci s'oxyde ou reprenne du phosphore. En outre, ce faisant, le laitier a le temps de se refroidir. On est alors amené à le maintenir en température au moyen d'un brûleur à flamme oxydante. Mais, il convient alors d'utiliser un combustible comme le CO gazeux, pour éviter que la combustion ne s'accompagne d'une formation de vapeur d'eau.

La présente invention a pour but une solution simple et efficace au problème de la passivation d'un laitier d'affinage phosphuré, solution qui ne nécessite aucune installation particulière, ni de séparation préalable métal-laitier et qui conduit rapidement à inhiber les constituants nocifs.

A cet effet, l'invention a pour objet un procédé de traitement d'un laitier d'affinage phosphuré par oxydation à chaud, caractérisé en ce qu'on lui incorpore un adjuvant solide facilement fusible et fortement oxydant.

Par « facilement fusible », on entend désigner des adjuvants capables de fondre aisément au contact du laitier en équilibre thermique avec le bain métallique en fin d'affinage. A cet égard, les inventeurs préconisent l'emploi d'adjuvants présentant un point de fusion inférieur à 900 °C environ.

Parmi les produits répondant aux spécifications voulues, on retiendra de préférence les carbonates de métaux alcalins ou alcalino-terreux qui sont d'excellents oxydants ($Na_2CO_3$, $MgCO_3$, $K_2CO_3$).

Parmi ceux-ci, le carbonate de sodium ($Na_2CO_3$) se trouve être parfaitement approprié, en raison de son bas point de fusion (850 °C). Par ailleurs, le produit est peu coûteux et disponible en grande quantité dans le commerce. De plus, il ne nécessite aucune précaution particulière ni de conditionnement, ni d'emploi, et ses propriétés chimiques en font un produit sidérurgique d'utilisation courante.

Par ailleurs, les carbonates présentent, par rapport aux autres composés susceptibles d'être utilisés, l'avantage de former par décomposition à chaud de l'oxyde de carbone (CO). Ce gaz, qui se dégage alors du laitier, brûle à l'atmosphère en dégageant des calories qui tendent à réduire l'effet refroidissant dû à l'apport de matière froide au laitier.

Il doit être bien compris que le problème essentiel à l'origine de l'invention était de parvenir à réaliser un contact intime — le plus intime possible — entre l'oxygène et les phosphures du laitier. A cet effet, les inventeurs ont eu l'idée d'utiliser des agents fixateurs de l'oxygène, mais capables de le libérer à bon escient et au bon moment, c'est-à-dire capables de former à basse température une phase liquide de faible viscosité qui s'infiltre dans les anfractuosités du laitier phosphuré.

On aura compris que les carbonates de métaux alcalins ou alcalino-terreux — et, de préférence $Na_2CO_3$ — répondent à de telles exigences, comme le montrent les réactions élémentaires ci-après.

$$Na_2CO_3 \xrightarrow{T(850^\circ)} Na_2O + CO\uparrow + 1/2\ O_2\uparrow$$

dont l'oxygène produit se porte sur le phosphure selon

$$M_3P_2 + 4\ O_2 \rightarrow 3\ MO + P_2O_5.$$

Globalement la réaction de passivation du laitier s'écrit donc :

$$8\,Na_2CO_3 + M_3P_2 \xrightarrow{T(850\,^\circ C)} 8\,Na_2O + 3\,MO + P_2O_5 + 8\,CO^{\uparrow}.$$

La mise en œuvre de l'invention ne pose pas de difficultés particulières.

Le carbonate de sodium se présente de préférence sous forme pulvérulente afin de faciliter sa fusion. Il peut être livré en vrac ou conditionné en sachets. Quel que soit son mode de livraison, on l'introduit, selon les pratiques habituelles, sur le laitier à la fin de l'affinage.

Le laitier peut, ou non, avoir été préalablement, séparé du bain métallique.

Dans l'affirmative, le carbonate peut être jeté en sachets sur le laitier sans précaution aucune.

Dans le cas contraire, il est préférable, pour les raisons évoquées au début, de saupoudrer le carbonate sur le laitier de manière à ne pas trop découvrir le bain métallique ou à provoquer une agitation de ce dernier.

Les quantités à mettre en œuvre dépendent bien entendu de la quantité de phosphore transféré au laitier au cours de l'affinage. Les inventeurs ont pu montrer que la quantité Q de carbonate de sodium à employer est fonction de la diminution D de la teneur pondérale du phosphore dans le bain en cours d'affinage, selon la relation :

$$7{,}5 \times 10^3 \times D \leq Q \leq 15 \times 10^3 \times D$$

où Q est exprimé en kg par 100 tonnes de métal (kg/100 tm) et D en % pondéral.

Des expériences ont été effectuées à partir d'un bain d'acier dont la teneur en phosphore est passée, au cours de l'affinage par injection de calcium, d'une valeur initiale de 0,025 % à une valeur finale de 0,015 % (soit D = 0,010 %). Ces expériences ont montré, en accord avec la relation ci-dessus, que la quantité de $Na_2CO_3$ à utiliser devait être comprise entre 75 et 150 kg/100 tm. Autrement dit, le rapport exprimé en poids, entre la quantité de $Na_2CO_3$ à ajouter au laitier et la quantité de phosphure de calcium ($Ca_3P_2$) contenue initialement dans le laitier, se situait entre 2,5 et 5.

L'écart, représenté par un coefficient de 2 entre ces valeurs extrêmes, s'explique par le fait que l'oxygène atmosphérique participe lui aussi à la passivation du laitier. Sa contribution, qui demeure certes limitée, augmente cependant avec sa pression partielle dans l'atmosphère au-dessus du laitier et avec le temps dont on dispose pour effectuer le traitement du laitier.

Entre les valeurs limites précitées, la quantité d'adjuvant à utiliser sera donc déterminée en fonction de ces données. Par ailleurs, il a été observé qu'à partir d'une quantité de $Na_2CO_3$ de l'ordre de 150 kg/100 tm, le laitier se stabilisait rapidement, même en présence d'une atmosphère neutre.

En revanche, en deçà de la limite inférieure de 75 kg/100 tm, la passivation ne semble plus pouvoir être correctement assurée dans des délais acceptables, et ceci même sous une atmosphère fortement enrichie en oxygène.

## Revendications

1. Procédé de traitement d'un laitier phosphuré obtenu par affinage d'un bain métallique, selon lequel, dans le but d'éviter l'hydrolyse du laitier, on le stabilise par oxydation à chaud et caractérisé en ce qu'on opère ladite oxydation en incorporant au laitier après affinage, un adjuvant solide fortement oxydant et dont le point de fusion est inférieur à 900 °C environ.

2. Procédé selon la revendication 1, caractérisé en ce que ledit adjuvant est un carbonate de métal alcalin ou alcalino-terreux.

3. Procédé selon la revendication 2, caractérisé en ce que le métal alcalin ou alcalino-terreux fait partie du groupe comprenant Na, K, Mg.

4. Procédé selon les revendications 1 à 3, caractérisé en ce que l'adjuvant est du carbonate de sodium.

5. Procédé selon la revendication 1, caractérisé en ce que l'adjuvant est conditionné sous forme pulvérulente avant son introduction dans le laitier.

6. Procédé selon la revendication 4, caractérisé en ce qu'on utilise une quantité Q d'adjuvant qui dépend de la diminution D de la teneur pondérale du phosphore dans le bain métallique au cours de l'affinage, selon la double relation :

$$7\,500\,D \leq Q \leq 15\,000\,D$$

où Q est exprimé en kg par 100 tonnes de métal et D en % pondéral.

## Claims

1. A process of treating a phosphided slag obtained in refining a metal bath, in which, with a view to

avoid hydrolysis of the slag, said slag is stabilized by hot oxidizing, said process being characterized in that said oxidizing is performed by incorporating into said slag, after the refining operation, a solid, strongly oxidizing auxiliary agent having a melting point lower than about 900 °C.

2. A process according to claim 1, characterized in that said auxiliary agent is an alkaline or alkaline-earth metal carbonate.

3. A process according to claim 2, characterized in that the alkaline or alkaline-earth metal is of the group comprising Na, K, Mg.

4. A process according to claims 1 to 3, characterized in that the auxiliary agent is sodium carbonate.

5. A process according to claim 1, characterized in that the auxiliary agent is obtained in a pulverulent condition before being introduced in the slag.

6. A process according to claim 4, characterized in that said auxiliary agent is used in an amount Q which depends on the decrease D of the phosphorus content by weight in the metal bath during the refining operation according to the double equation :

$$7\,500\ D \leqslant Q \leqslant 15\,000\ D$$

in which Q is given in kilograms for 100 metric tons of metal and D in percent by weight.

**Ansprüche**

1. Behandlungsverfahren einer phosphidierten Schlacke durch Frischen eines Metallbades, Verfahren nach welchem, um die Hydrolyse der Schlacke zu vermeiden, das Metallbad durch Warmoxydation stabilisiert wird, und dadurch gekennzeichnet dass die genannte Oxydation betrieben wird indem man nach Frischen ein festes Zusatzmittel beimengt das stark oxydierend wirkt und dessen Schmelzpunkt unter ungefähr 900 °C liegt.

2. Verfahren nach dem Anspruch 1, dadurch gekennzeichnet dass das genannte Zusatzmittel ein alkalisches oder ein erdalkalisches Metallkarbonat ist.

3. Verfahren nach dem Anspruch 2, dadurch gekennzeichnet dass das alkalische oder erdalkalische Metall zu der Na, K, Mg beinhaltenden Gruppe gehört.

4. Verfahren nach den Ansprüchen 1 bis 3 dadurch gekennzeichnet dass das Zusatzmittel Natriumkarbonat ist.

5. Verfahren nach dem Anspruch 1, dadurch gekennzeichnet dass das Zusatzmittel, vor Eingabe in die Schlacke, sich in einem feinpulverigem Zustand befindet.

6. Verfahren nach Anspruch 4, dadurch gekennzeichnet dass man eine Menge « Q » des Zusatzmittels benützt, Menge die von der Minderung « D » des gewichtsanalytischen Verhaltens des Phosphors im Metallbad während des Frischens abhängig ist, und dies nach der Beziehung

$$7\,500\ D \leqslant Q \leqslant 15\,000\ D$$

worin « Q » in Kilogramm pro 100 metrischen Tonnen Metall und « D » in gewichtsanalytischen Prozenten ausgedrückt sind.